# EUROPEAN PATENT SPECIFICATION

(11) **EP 1 628 110 B1**
(45) Date of publication and mention of the grant of the patent: **24.08.2011**
(21) Application number: 05013128.3
(22) Date of filing: 17.06.2005
(51) Int. Cl.: F28D 20/02, E04B 1/78, F16L 59/02

(54) **Loose fill insulation product having phase change material therein**
Lose eingefülltes Isolationsprodukt mit einem Phasenwechselmaterial
Matériau isolant en vrac comprenant des éléments à changement de phase

(30) Priority: 17.06.2004 US 869994
(43) Date of publication of application: 22.02.2006
(73) Proprietor: SAINT-GOBAIN ISOVER, 92400 Courbevoie (FR)
(72) Inventor: Toas, Murray S, Norristown Pennsylvania 19401 (US); Ober, David G, Doylestown Pennsylvania 18901 (US); Ellis, Michael P., Boyertown Pennsylvania 19512 (US)
(74) Representative: Aupetit, Muriel J. C.

(56) References cited:
- EP-A- 0 306 202
- DE-A1- 19 813 562
- FR-A- 2 575 757
- US-A- 6 037 032
- US-A- 6 077 597

## Description

### FIELD OF THE INVENTION

The present invention relates to insulation products, and more specifically to loose fill insulation products and methods of making the same.

### BACKGROUND OF THE INVENTION

Thermal insulation for buildings and other structures is available in the form of mats, batts, blankets and loose fill. Mats, batts and blankets are flexible constructions containing various fibers and are generally prefabricated before being brought to a construction site and installed. In contrast, loose fill thermal insulation includes a large number of discrete fibers, flakes, powders, granules and/or nodules of various materials. The loose fill can be poured or blown into hollow walls or other empty spaces to provide a thermal barrier.

The use of phase change materials in insulation systems has been proposed as a means of better moderating the transfer of heat between the interior and exterior of a structure. For example, U.S. Patent No. 5,770,295 to Alderman describes a multi-layered insulation product having a layer of phase change material sandwiched between two insulation layers.

Another example can be seen in document US-A-6077597.

While approaches such as Alderman have focused on reducing heat loss through prefabricated insulation products, such as fiberglass mats, they have not addressed how to improve the insulation properties of loose fill insulation. Therefore, there remains a need for a cost effective loose fill thermal insulation product that can better moderate the transfer of heat between a structure's interior and exterior.

### SUMMARY OF THE INVENTION

A thermal insulation product is provided comprising a loose fill insulation for insulating an interior of a hollow or open space in a building structure and at least one phase change material dispersed in the loose fill insulation. In one embodiment, the at least one phase change material is dispersed uniformly in the loose fill insulation and comprises at least one n-paraffin material having a phase change temperature between about 17.2-29.4°C (63-85°F). A method of making a thermal insulation product is also provided comprising the step of dispersing at least one phase change material in a loose fill insulation for insulating an interior of a hollow or open space in a structure.

Incorporating a phase change material into a loose fill insulation product provides an improved insulation product for regulating heat transfer between the interior and exterior of a structure. Flammability of the phase change material is not a concern if the loose fill insulation is installed behind dry wall or a flame retardant is added to the loose fill insulation. The loose fill insulation can be customized to optimize its performance in various climates by simply selecting the phase change material that has a phase transformation temperature best suited to the climate. More than one phase change material may be selected to further customize the loose fill insulation for the selected climate. Better regulating the heat transfer between the interior and exterior of the structure can move the heating or cooling load to times when energy prices are less expensive and potentially reduce the need for a heating and/or cooling cycles, thereby saving energy and money.

The above and other features of the present invention will be better understood from the following detailed description of the preferred embodiments of the invention that is provided in connection with the accompanying drawings.

### BRIEF DESCRIPTION OF THE DRAWINGS

The accompanying drawings illustrate preferred embodiments of the invention, as well as other information pertinent to the disclosure, in which:
FIG. 1 illustrates a method of applying a phase change material to loose fill insulation during manufacture thereof; and
FIG. 2 illustrates a method of applying a phase change material to loose fill during application thereof.

### DETAILED DESCRIPTION

As used herein, "phase change material" (PCM) means a "latent" thermal storage material, such as one that uses inter molecular physical bonds to store and release heat. The thermal energy transfer of a phase change material occurs when the material changes from a solid to a liquid, or from a liquid to a solid form, although with some PCMs thermal energy transfer occurs when the material changes from a solid to a softer solid and vice versa. Initially, the solid-liquid PCM performs like a conventional storage material in that its temperature rises as it absorbs heat. Unlike a conventional storage material, when a PCM reaches the temperature at which it changes phase (its melting point), it absorbs large amounts of heat without getting hotter. When the ambient temperature in the space around the PCM material drops, the PCM solidifies, releasing its stored latent heat. A PCM absorbs and emits heat while maintaining a constant temperature. Within the human comfort range of 68°-86°F (20° to 30°C), latent thermal storage materials are very effective. These materials reportedly can store from 5 to 14 times more heat per unit volume than sensible heat storage materials such as water, masonry or rock.

As used herein, "heat of fusion" means the amount of heat required to convert a unit mass of a solid at its melting point into a liquid without an increase in temperature.

Provided herein is a loose fill insulation product having a phase change material dispersed therein. The loose fill insulation can be in the form of fibers and/or nodules of various materials. The loose fill insulation is of the type for insulating an interior of a hollow or open space in a building structure, e.g., a house, office, or other building structure. Preferably, the loose fill can be compressed during storage to save space, and then expanded or "fluffed-up" with air or another gas when poured or blown into a hollow wall or other empty space of a structure. The loose fill can include organic materials, inorganic materials or both. Examples of organic loose fill materials include animal fibers, such as wool; cellulose-containing vegetable fibers, such as cotton, rayon, granulated cork (bark of the cork tree), redwood wool (fiberized bark of the redwood tree), and recycled, shredded or ground newspaper fibers; and thermoplastic polymer fibers, such as polyester; and expanded plastic beads. Examples of inorganic loose fill materials include diatomaceious silica (fossilized skeletons of microscopic organisms), perlite, fibrous potassium titanate, alumina-silica fibers, microquartz fibers, opacified colloidal alumina, zirconia fibers, alumina bubbles, zirconia bubbles, carbon fibers, granulated charcoal, cement fibers, graphite fibers, rock fibers, slag fibers, glass wool and rock wool. The loose fill can include one or more varieties of loose fill material. In an exemplary embodiment, the loose fill insulation includes OPTIMA® fiberglass loose fill insulation available from CertainTeed Corporation, Valley Forge, PA.

When manufactured and compressed during storage, the loose fill particles forming the compressed loose fill are dimensioned so as to have an equivalent sphere with a diameter generally smaller than 3 cm, preferably from 0.1 to 1 cm. In one embodiment, after the compressed loose fill is decompressed, expanded and processed through a blowing hose, the loose fill particles forming the expanded loose fill are each dimensioned so as to just fit within a sphere having a diameter of from 0.1 to 4 cm, preferably from 0.5 to 2 cm.

The thermal insulation product including the phase change material can be formed by dispersing, preferably uniformly, the phase change material in the loose fill before or at the same time as the loose fill is poured or blown into an interior, empty space of a hollow or open object, such as a hollow wall (before application of the drywall) or an attic (if the loose fill and PCM meet applicable flammability standards). Methods of pouring and blowing loose fill are well known in the art and will not be repeated here in detail. Generally, blowing loose fill involves feeding compressed loose fill into a blower where it is mixed with a gas, such as air, expanded, processed through a blowing hose, and then blown into a hollow or open structure to form thermal insulation.

In embodiments, a mixture including one or more phase change materials and a dry binder (i.e., an adhesive later activated by water at the time of installation of the loose fill) can be sprayed onto or otherwise mixed with the loose fill before the loose fill is compressed and/or when the loose fill is decompressed. Also, a mixture including one or more phase change materials and a binder (i.e., an adhesive) can be mixed with the loose fill by spraying on the loose fill at or near the end of the blowing hose before the loose fill is installed in a hollow or open space. The binder serves to join and hold the phase change material and the loose fill insulation together. The binder can be organic or inorganic. The organic binder can include an organic water based binder such as an acrylic latex or a vinyl acetate latex. The organic binder can also include a sprayed hot melt adhesive such as a thermoplastic polymer. The inorganic binder can include an inorganic bonding agent such as sodium silicate or a hydraulic cement. Evaporation of the liquid from the liquid mixture on the loose fill results in a loose fill thermal insulation product with the phase change material and/or binder dispersed in the loose fill. In various embodiments, the phase change material and the binder can be added to the loose fill at the same time or at different times. A mineral oil can be used instead of or in addition to the binder for the purpose of dust reduction. In other embodiments, rather than providing the phase change material in a liquid mixture, the phase change material may be provided to the loose fill in its liquid state or as a powder or fiber and, optionally, along with a mineral oil and/or binder as described above.

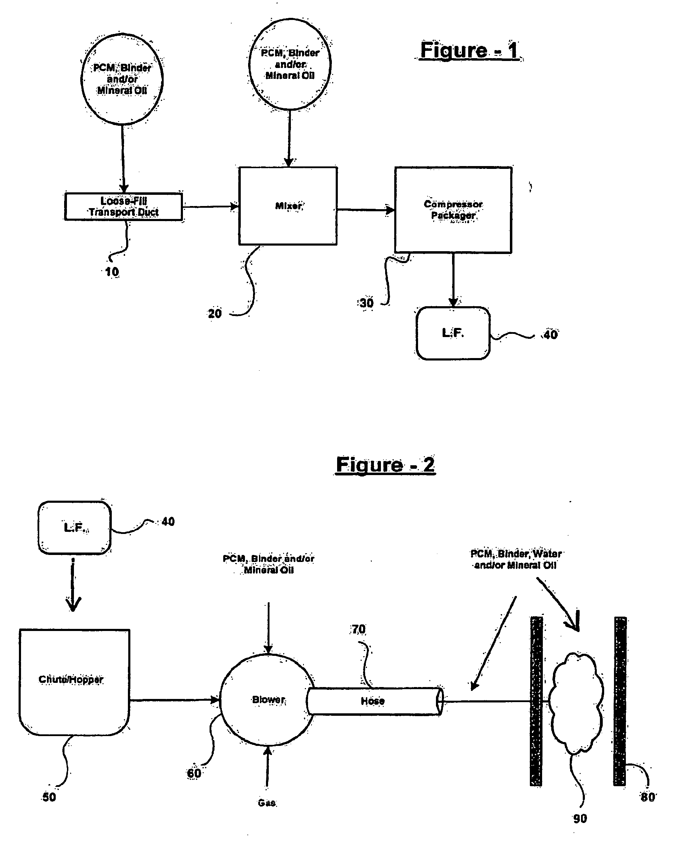

FIG. 1 shows an embodiment in which loose fill insulation is fed through a loose fill transport duct 10 into mixer 20 to form a mixture of loose fill and phase change material. The phase change material may be provided, for example, in liquid form. In one embodiment, the phase change material is provided in a form that prevents leaking or spread of the phase change material after phase change into liquid form, such as by providing the phase change material in microcapsules, in permeated plastic pellets (e.g., polyester pellets saturated with melted PCM material (e.g., a paraffin)), in a hydrophilic silica powder, in granulates, such as natural porous diatomaceous earth particles, in a portion of the fibers, including on a portion of the fibers, of the loose fill insulation or a combination thereof. In embodiments, a dry binder (to be later activated by water or other material during loose fill application) and/or mineral oil can also be added in the loose fill transport duct 10 or added in and mixed in mixer 20 with the loose fill and phase change material. The phase change material can be added directly to the mixer 20 and/or to the loose fill transport duct 10. The mixture is then fed to compressor/packager 30, where the mixture is compressed to remove air and increase density and packaged as compressed loose fill 40 including the phase change material.

FIG. 2 shows that compressed loose fill 40 can then be fed via a chute or hopper 50 into a blower 60. Blower 60 uses gas to decompress, expand and process the compressed loose fill 40 including the phase change material through a corrugated blowing hose 70. From blower 60, expanded loose fill 90 is blown into an open space 80 to provide thermal insulation. In other embodiments, phase change material, binder (e.g., dry binder) and/or mineral oil is added along with the compressed loose fill to blower 60, and the blower 60 both mixes the phase change material, binder and/or mineral oil with compressed loose fill and expands the compressed loose fill. If dry binder is added in the blower, the binder is activated with water applied at or near the end of the blowing hose at the time the loose fill is installed in a cavity. In still other embodiments, the phase change material, water, binder and/or mineral oil is added to expanded loose fill in a liquid spray application injected at or near the end of the blowing hose 70 or sprayed on the expanded loose fill 90 as it exits the blowing hose 70 and is blown into the open space 80. In the embodiment where the binder is added at or near the end of the blowing hose 70, a liquid binder is preferred.

After application of the loose fill insulation including the phase change material to a structure, when the temperature in a room rises above the phase change material's transition temperature (the point at which the material changes phase), the phase change material absorbs heat and melts, maintaining its temperature until fully melted and limiting heat transfer. As the air temperature decreases, the phase change material releases the stored heat and returns to a solid state. The phase change material or materials selected for dispersion in the loose fill insulation is selected based on the environment of the structure in which the loose fill insulation will be installed, i.e., the phase transition temperature is selected as appropriate based on the temperature characteristics and fluctuations of an environment that effect the heating and cooling characteristics of a structure. The environment may be a heating environment (e.g., northern cold environments), a cooling environment (e.g., southern warm environments) or a heating and cooling environment (e.g., north-eastern United States). Some literature has reported that the transition temperature for maximizing residential heating and cooling benefits using a phase change material is 77°F (25°C). Still, some literature has suggested that the transition temperature should be near standard or suggested room temperatures of 65-72°F (18.3-22.2°C)) for heating dominated climates or 72-79°F (22.2-26.1°C) for cooling dominated climates, or at a temperature that is slightly higher (e.g., 1-2 degrees) than the average room temperature.

In one embodiment, the phase change material has a relatively high phase change temperature between about 25°C (77.0°F) to about 29.4°C (85.0°F), and preferably about 28.3°C (83°F). This phase change material can slow the transfer or heat energy from the outside of a structure (such as during summer) to the inside of the structure. One exemplary phase change material for this purpose is octadecane, which has a melting point of about 28°.3 C (83°F). In another embodiment, the phase change material has a relatively low phase change temperature between about 17.2°C (63.0) to about 22.2°C (72.0°F), and preferably about 18.3°C (65°F). This phase change material can slow heat transfer from the inside to the outside during winter. An exemplary phase change material for this purpose is hexadecane, which has a melting point of about 18.3°C (65°F). By slowing heat transfer, the phase change materials may also move the heating and cooling load to off peak hours when energy costs may be lower. These waxes, i.e., hexadecane and octadecane, may be mixed with the loose fill insulation in liquid or dry form, such as with a carrier such as microcapsules. Assuming the phase change material is provided to the loose fill insulation as a liquid or other non-encapsulated or bound form, once installed and after phase change to liquid form, these waxes should have sufficient viscosity to substantially maintain the uniform dispersion within and throughout the loose fill insulation.

Flammability of the phase change material is not a concern with loose fill insulation that is installed behind drywall, such as gypsum drywall that is normally fire retardant. A fire retardant additive can also be added to the loose fill insulation.

In one embodiment, the phase change material is provided as about five to twenty-five percent of the dry weight of the loose fill insulation product. The at least one phase change material may include the low phase change temperature material for slowing heat transfer from the inside to the outside, the high phase change temperature material for slowing heat transfer from the outside to the inside, an intermediate phase change temperature material (i.e., with a phase change temperature between the low and high phase change temperatures (e.g., e.g., n-heptadecane with a melting point of about 72°F)), or two or more phase change materials, e.g., both a low phase change temperature material and a high phase change temperature material to provide both functions; for example, a 50-50 mix of octadecane and hexadecane may be employed.

In an exemplary embodiment, the phase change material includes a paraffin wax (e.g., n-tetradecane (C-14), n-pentadecane (C-15), n-hexadecane (C-16), n-heptadecane (C-17), n-octadecane (C-18), n-nonadecane (C-19), etc.) although other materials may be appropriate in certain embodiments, such a Glauber salt (sodium sulfate decahydrate), calcium chloride hexahydrate, linear crystalline alkyl hydrocarbons, fatty acids and esters, polyethylene glycols, long alkyl side chain polymers, solid state series of pentaerythritol, pentaglycerine, neopentyl glycol, low melting metals and alloys, quaternary ammonium clathrates and semi-clathrates, salt hydrides, and olefins. Paraffins are generally preferred as they are relatively inexpensive and widely available at different melting temperatures, which depend on the carbon chain lengths thereof. Unless encapsulated, salt hyrdrates are not preferred because they absorb water, which decreases their effectiveness, and salt hydrates may be corrosive to some building materials.

The following are some exemplary phase change materials that may be appropriate for dispersion within the loose fill, along with the respective heats of fusion.

| **Compound/Product Name** | **Melt Point °C** | **Melt Point °F** | **Heat of Fusion (kj/kg)** |
|---|---|---|---|
| Hexadecane | 18.17 | 64.7 | 236 |
| Heptadecane | 22 | 71.6 | 214 |
| Octadecane | 28.18 | 82.7 | 244 |
| Butyl Stearate | 19 | 66.2 | 140 |
| Propyl Palmitate | 19 | 66.2 | 186 |
| 1 Dodecanol | 17.5 | 63.5 | 188.5 |
| Rubitherm RT 26 | 25 | 77.0 | 131 |
| Rubitherm RT 27 | 28 | 82.4 | 179 |
| Rubitherm RT 20 | 22 | 71.6 | 172 |
| Rubitherm PX 27 | 28 | 82.4 | 112 |
| Rubitherm GR 27 | 29 | 82.4 | 72 |
| TEAP TH 29 | 29 | 84.2 | 200 |

The Rubitherm products are all available from Rubitherm GmbH of Hamburg, Germany. The Rubithenn products with designations "RT" are narrow cut, highly crystalline n-paraffin content materials. The Rubitherm product with designation "PX" is available in powder form where a phase change material is contained within a secondary supporting structure including a hydrophilic silica powder. When in liquid form, the phase change material does not leak out of the powder, resulting in the bound phase change material always being a solid in its macroscopic form. The Rubitherm product with designation "GR" is contained within a secondary support structure including a natural porous diatomaceous earth particle. When in liquid form, the phase change material does not leak out of the granulate, resulting in the bound phase change material always being a solid in its macroscopic form. The TEAP TH 29 product, available from PCM Thermal Solutions of Naperville, Illinois, is an inorgarlic hydrated salt.

Providing phase change materials in drywall or other prefabricated products has met with some resistance from manufacturers because of the number of different climates serviced by their products. Manufacturing several different products with each product having a specific phase change material having a transition temperature tailored to a specific climate can add significant expense to the manufacturing and distribution process. One advantage of providing the phase change material on-location during the application process (FIG. 2), which is likely not practical with non-loose fill insulation, is that the loose fill insulation need not have the phase change material dispersed therein prior to packaging (FIG. 1), meaning, in this embodiment, that the loose fill insulation manufacturing process need not be changed. In this embodiment, the installer can simply select the phase change material that best fits the installation environment, with possible suggestion from the manufacturer of the loose fill insulation.

Incorporating a phase change material into a loose fill insulation product provides an improved insulation product for regulating heat transfer between the interior and exterior of a structure. Flammability of the phase change material is not a concern if the loose fill insulation is installed behind dry wall or a flame retardant is added to the loose fill insulation. The loose fill insulation can be easily customized to optimize its performance in various climates by simply selecting the phase change material that has a phase transformation temperature best suited to the climate. More than one phase change material may be selected to further customize the loose fill insulation for the selected climate. Better regulating the heat transfer between the interior and exterior of the structure can move the heating or cooling load to times when energy prices are less expensive and potentially reduce the need for a heating and/or cooling cycles, thereby saving energy and money.

## Claims

1. A thermal insulation product for insulating an interior of a hollow or open space in a building structure comprising:
a mixture of a loose fill insulation in the form of fibers and/or nodules, said loose fill insulation being able to be blown or poured for insulating said interior of a hollow or open space in said building structure; and
at least one phase change material, said one phase change material being therefore dispersed in said loose fill insulation.

2. The product of claim 1, wherein the loose fill insulation comprises fibers selected from the group consisting of cellulose-containing fibers, synthetic polymer fibers, rock wool fibers, glass fibers and shredded or ground recycled newspapers.

3. The product of claims 1 and 2, wherein the at least one phase change material is dispersed uniformly in the loose fill insulation.

4. The product of claims 1 to 3, further comprising a mineral oil and/or binder dispersed in the loose fill insulation.

5. The product of claims 1 to 4, wherein said at least one phase change material comprises an n-paraffin.

6. The product of claim 5, wherein said at least one phase change material comprises hexadecane, heptadecane and/or octadecane.

7. The product of claims 1 to 6, wherein the phase change material is coupled to a carrier.

8. The product of claim 7, wherein the carrier comprises microcapsules, plastic pellets, silica powder, porous diatomaceous particles, a portion of the fibers of said loose fill insulation or a combination thereof.

9. The product of claims 1 to 8, wherein said at least one phase change material comprises a phase change material having a melting point chosen between about 25 - 29,4°C , between about 17,2 - 29,4°C, or between about 17,2 - 22,2°C.

10. The product of claims 1 to 8, wherein said at least one phase change material comprises a first phase change material having a melting point between about 25
- 29,4°C and a second phase change material having a melting point between about 17,2 - 22,2°C.

11. A method of making a thermal insulation product suitable for insulating an interior of a hollow or open space in a building structure, according to one of the preceding claims, comprising the step of dispersing the at least one phase change material in said loose fill insulation.

12. The method of claim 11, wherein the phase change material is dispersed therein prior to packaging or the loose fill insulation is packaged and opened prior to dispersing the at least one phase change material.

13. The method of claim 11, wherein the at least one phase change material is added in the loose fill insulation in a blower or the at least one phase change material is dispersed in the loose fill insulation added to expanded loose fill or in a liquid spray application injected at or near the end of a blowing hose or sprayed on the expanded loose fill as it exits the blowing hose

14. A method of blowing or pouring said the thermal insulation product according to claim 1 to 10 for insulating an interior of a hollow or open space in a building structure.

## Patentansprüche

1. Wärmedämmerzeugnis zum Dämmen eines Inneren eines Hohlraums oder eines Freiraums in einer Baustruktur umfassend:
ein Gemisch einer losen Füllisolierung in der Form von Fasern und/oder Knöllchen, wobei das lose Fülldämmmaterial zum Dämmen des Inneren eines Hohlraums oder eines Freiraums in der Baustruktur geblasen oder geschüttet werden kann; und
zumindest ein Phasenwechselmaterial, wobei dieses eine Phasenwechselmaterial in der losen Füllisolierung verteilt ist.

2. Erzeugnis nach Anspruch 1,
**dadurch gekennzeichnet, dass**
das lose Dämmmaterial Fasern, ausgewählt aus der Gruppe bestehend aus Zellulose enthaltenden Fasern, synthetischen Polymerfasern, Steinwollfasern, Glasfasern und zerrissenen oder gemahlenen recycelten Zeitungen, umfasst.

3. Erzeugnis nach Ansprüchen 1 und 2,
**dadurch gekennzeichnet, dass**
zumindest ein Phasenwechselmaterial gleichmäßig in dem losen Fülldämmmaterial verteilt ist.

4. Erzeugnis nach Ansprüchen 1 bis 3, weiterhin umfassend ein Mineralöl und/oder Bindemittel, das in dem losen Fülldämmmaterial verteilt ist.

5. Erzeugnis nach Ansprüchen 1 bis 4,
**dadurch gekennzeichnet, dass**
zumindest ein Phasenwechselmaterial ein n-Paraffin umfasst.

6. Erzeugnis nach Anspruch 5,
**dadurch gekennzeichnet, dass**
zumindest ein Phasenwechselmaterial Hexadecan, Heptadecan und/oder Octadecan umfasst.

7. Erzeugnis nach Ansprüchen 1 bis 6,
**dadurch gekennzeichnet, dass**
das Phasenwechselmaterial an einen Träger gekoppelt ist.

8. Erzeugnis nach Anspruch 7,
**dadurch gekennzeichnet, dass**
der Träger Mikrokapseln, Kunststoffpellets, Siliziumpulver, poröse Diatomeenpartikel, eine Portion der Fasern des losen Fülldämmmaterials oder eine Kombination davon umfasst.

9. Erzeugnis nach Ansprüchen 1 bis 8,
**dadurch gekennzeichnet, dass**
das zumindest eine Phasenwechselmaterial ein Phasenwechselmaterial umfasst, das einen Schmelzpunkt ausgewählt zwischen ungefähr 25 - 29,4°C, zwischen ungefähr 17,2 - 29,4°C oder zwischen ungefähr 17,2 - 22,2°C aufweist.

10. Erzeugnis nach Ansprüchen 1 bis 8,
**dadurch gekennzeichnet, dass**
das zumindest eine Phasenwechselmaterial ein erstes Phasenwechselmaterial mit einem Schmelzpunkt zwischen ungefähr 25 - 29,4°C und ein zweites Phasenwechselmaterial mit einem Schmelzpunkt zwischen ungefähr 17,2 - 22,2°C umfasst.

11. Verfahren zum Herstellen eines Wärmedämmerzeugnisses, das zum Dämmen eines Inneren eines Hohlraums oder eines Freiraum in einer Baustruktur geeignet ist, gemäß einem der vorhergehenden Ansprüche, umfassend den Schritt, dass das zumindest eine Phasenwechselmaterial in dem losen Fülldämmmaterial verteilt wird.

12. Verfahren nach Anspruch 11,
**dadurch gekennzeichnet, dass**
das Phasenwechselmaterial darin vor Verpacken verteilt wird oder das lose Fülldämmmaterial verpackt und vor Dispersion des zumindest einen Phasenwechselmaterials geöffnet wird.

13. Verfahren nach Anspruch 11,
**dadurch gekennzeichnet, dass**
das zumindest eine Phasenwechselmaterial in einem Gebläse zu dem losen Fülldämmmaterial hinzugefügt oder das zumindest eine Phasenwechselmaterial in dem losen Fülldämmmaterial verteilt, hinzugefügt zu expandierter loser Füllung oder in einer Flüssigspray-Anwendung bei oder nahe dem Ende eines Blasschlauchs injiziert oder auf die expandierte lose Füllung gesprüht wird, wenn sie den Blasschlauch verlässt.

14. Verfahren zum Blasen oder Schütten des Wärmedämmerzeugnisses nach Anspruch 1 bis 10 zum Dämmen eines Inneren eines Hohlraums oder eines Freiraums in einer Baustruktur.

## Revendications

1. Produit d'isolation thermique pour isoler un intérieur d'un espace creux ou ouvert dans une structure de bâtiment comprenant :
un mélange d'un isolant en vrac sous la forme de fibres et/ou de nodules, ledit isolant en vrac pouvant être soufflé ou déversé pour isoler ledit intérieur d'un espace creux ou ouvert dans ladite structure de bâtiment ; et
d'au moins un matériau à changement de phase, ledit matériau à changement de phase étant par conséquent dispersé dans ledit isolant en vrac.

2. Produit selon la revendication 1, dans lequel l'isolant en vrac comprend des fibres choisies dans le groupe constitué par les fibres contenant de la cellulose, les fibres polymères synthétiques, les fibres de laine de roche, les fibres de verre et les papiers journaux recyclés déchirés ou broyés.

3. Produit selon les revendications 1 et 2, dans lequel l'au moins un matériau à changement de phase est dispersé uniformément dans l'isolant en vrac.

4. Produit selon les revendications 1 à 3, comprenant en outre une huile minérale et/ou un liant dispersé dans l'isolant en vrac.

5. Produit selon les revendications 1 à 4, dans lequel ledit au moins un matériau à changement de phase comprend une n-paraffine.

6. Produit selon la revendication 5, dans lequel ledit au moins un matériau à changement de phase comprend de l'hexadécane, de l'heptadécane et/ou de l'octadécane.

7. Produit selon les revendications 1 à 6, dans lequel le matériau à changement de phase est couplé à un support.

8. Produit selon la revendication 7, dans lequel le support comprend des microcapsules, des granulés en plastique, de la poudre de silice, des particules de terre de diatomées poreuse, une partie des fibres dudit isolant en vrac ou une combinaison de ceux-ci.

9. Produit selon les revendications 1 à 8, dans lequel ledit au moins un matériau à changement de phase comprend un matériau à changement de phase ayant un point de fusion choisi entre environ 25 et 29,4 °C, entre environ 17,2 et 29,4 °C, ou entre environ 17,2 et 22,2 °C.

10. Produit selon les revendications 1 à 8, dans lequel ledit au moins un matériau à changement de phase comprend un premier matériau à changement de phase ayant un point de fusion entre environ 25 et 29,4 °C et un deuxième matériau à changement de phase ayant un point de fusion entre environ 17,2 et 22,2 °C.

11. Procédé de fabrication d'un produit d'isolation thermique, approprié pour isoler un intérieur d'un espace creux ou ouvert dans une structure de bâtiment, selon l'une des revendications précédentes, comprenant l'étape de dispersion de l'au moins un matériau à changement de phase dans ledit isolant en vrac.

12. Procédé selon la revendication 11, dans lequel le matériau à changement de phase y est dispersé avant conditionnement ou bien l'isolant en vrac est conditionné et ouvert avant dispersion de l'au moins un matériau à changement de phase.

13. Procédé selon la revendication 11, dans lequel l'au moins un matériau à changement de phase est ajouté dans l'isolant en vrac à l'intérieur d'une soufflante ou bien l'au moins un matériau à changement de phase est dispersé dans l'isolant en vrac ajouté à de l'isolant en vrac expansé ou dans une application d'aérosol liquide injecté à ou près de l'extrémité d'un tuyau de soufflage ou pulvérisé sur l'isolant en vrac expansé lorsqu'il sort du tuyau de soufflage.

14. Procédé de soufflage ou de déversement dudit produit d'isolation thermique selon les revendications 1 à 10 pour isoler un intérieur d'un espace creux ou ouvert dans une structure de bâtiment.
